# EUROPEAN PATENT SPECIFICATION

(11) **EP 1 339 758 B1**
(45) Date of publication and mention of the grant of the patent: **30.03.2005**
(21) Application number: 01996561.5
(22) Date of filing: 12.11.2001
(51) Int. Cl.: C08F 4/02, C08F 10/00

(54) **POLYMERISATION CATALYST SYSTEMS AND THEIR PREPARATION**
POLYMERISATIONSKATALYSATORSYSTEME UND DEREN HERSTELLUNG
SYSTEMES DE CATALYSEURS DE POLYMERISATION ET LEUR PREPARATION

(30) Priority: 14.11.2000 EP 00204003
(43) Date of publication of application: 03.09.2003
(73) Proprietor: TOTAL PETROCHEMICALS RESEARCH FELUY, 7181 Seneffe (Feluy) (BE)
(72) Inventor: BODART, Philippe, B-4480 Clermont-sous-Huy (BE); PLEE, Dominique, F-64140 Lons (FR); PETERS, Liliane, B-1495 Marbais (BE)
(86) International application number: PCT/EP2001/013169
(87) International publication number: WO 2002/040551

(56) References cited:
- WO-A-97/15528
- US-A- 5 057 296
- US-A- 5 105 051
- US-A- 5 270 273
- US-A- 5 972 510
- KRESGE C T ET AL: "ORDERED MESOPOROUS MOLECULAR SIEVES SYNTHESIZED BY A LIQUID-CRYSTAL TEMPLATE MECHANISM" NATURE,GB,MACMILLAN JOURNALS LTD. LONDON, vol. 359, no. 6397, 22 October 1992 (1992-10-22), pages 710-712, XP000573992 ISSN: 0028-0836 cited in the application

## Description

The present invention relates to the use of special mesoporous inorganic oxide supports for preparing catalyst systems suitable for preparing polymers of controlled morphology

Synthesis of inorganic mesoporous solids, with a narrow and selected distribution of pore sizes was first achieved by Sylvania Electric Products in US-A-3,556,725.

Mobil has carried out extensive work in the field of inorganic mesoporous solids in the nineties. These work have resulted more specifically in the synthesis of the composition MCM 41 (Mobil Composition of Matter 41), described in Nature, 1992, vol. 359, pp710-712 and are fully disclosed in many scientific publications and in patents such as for example U.S.-A-5,057,296.

Inorganic mesoporous oxide solids, with a narrow pore size distribution of 2 to 10 nm are now well known in the art. They have been used as catalysts or catalyst supports and as adsorbents. They are characterised by a large specific surface area with a controlled pore volume distribution, thereby allowing enhanced catalytic activity or adsorption. The use of such materials as supports for polymerisation catalysts is described for example in "Stereospecific propene polymerisation catalysis using an organometallic modified mesoporous silicate." by Tudor J. and O'Hare D., in Chem. Commun., 1997, pp 603-604.

Synthesis of silicic mesoporous material generally uses as starting material a tetraortho silicate (TEOS), a tetraalkylammonium or a sodium silicate or a silica precipitate.

TEOS has the disadvantage of being costly and to generate ethanol during hydrolysis, but when used in a neutral or acidic solution it allows the production of mesoporous particles of up to a few microns. Another disadvantage of TEOS, when used in a neutral or acidic environment, is a poor efficiency in surfactant integration.

Lower cost silicates must be used in a basic environment: they produce particles of irregular shape that are smaller than one micron.

The influence of the pH on the particles' size and morphology has also been studied for example in Di Renzo et al., Microporous and Mesoporous Materials, 1999, n°28, pp 437-446.

The preparation of mesoporous particles larger than 15 to 20 microns requires an additional binding step. Several binding methods have been used all of which produce various drawbacks as follows:
- The extrusion of mesoporous particles requires the use of a binder, a liquid and optional additives. It is used to prepare elongated extrudates but said extrudates have variable lengths;
- The agglomeration of mesoporous particles with a binder, a liquid and optional additives on a granulator dish is used to prepare spherical granules, but these granules have a broad size distribution;
- The compaction under pressure of the mesoporous particles with a binder and optionally with a liquid is used to prepare particles of at least a few mm for pharmaceutical applications;
- The spray-drying is used to prepare particles of from 20 to 200 microns having a narrow particle size distribution but poor mechanical properties without a binder.

All these methods thus require the use of substantial percentage of a binder to prepare a shaped catalyst. There is thus a need for a process for preparing mesoporous particles of from one micron to a few mm and of controlled morphology that will avoid these drawbacks.

It is particularly important to control the size and morphology of particles in the field of olefin polymerisation where it is known that the morphology of the final polymer will be determined by the size and shape of the catalyst grains and therefore of the support. It is the so-called "replication phenomenon", well known for instance in the field of ethylene polymerisation with a chromium catalyst. Examples of catalysts based upon mesoporous supports have already been described in literature, but these catalysts remain difficult to use (poor fluidisation, small particles) because the carrier particles lack morphology control: their use results therefore in bad fluff morphology as described e.g. by Ki-Soo Lee et al., in Journ. of Molecular catalysis A: Chemical, 159, 301-308, 2000.

It is an aim of the present invention to prepare a polymerisation catalyst system using a mesoporous support of controlled morphology said support being obtained without compaction step.

It is also an aim of the present invention to prepare a polymerisation catalyst system with a controlled pore size distribution consisting of a net of mesoporous pores of defined diameter and of defined micropore percentage.

It is another aim of the present invention to use such catalyst system to prepare polymers of controlled morphology.

It is a further aim of the present invention to use such catalyst system to prepare polymers essentially free of fines.

The present invention provides a process for preparing a supported catalyst for the production of polymers by polymerising or copolymerising one or more olefins having from 2 to 10 carbon atoms, vinyl aromatic compounds or vinyl acetate, said process comprising the steps of:
a) providing a mesoporous support of controlled morphology;
b) depositing a catalyst component on the support of step a)
characterised in that the mesoporous support is composed of primary and/or secondary inorganic mesoporous particles having a D10 of at least 2 microns and a D50 of at least 10 microns with a size of up to 10 mm, preferably up to 3 mm and more preferably up to 1.5 mm and is represented by the general formula:

M_{n/q}(WₐX_{b}Y_{c}Z_{d}Oₕ)

wherein
M represents one or more ions selected from the group of ammonium, IA, IIA, and VIIB for example hydrogen and/or sodium ions,
n and q represent respectively the equivalent fraction and the valence of the M ion(s) and n/q represents the number of moles or the molar fraction of the M ion(s),
W represents one or more divalent elements such as manganese, cobalt, iron and/or magnesium,
X represents one or more trivalent elements such as aluminium, boron iron and/or gallium,
Y represents one or more tetravalent elements such as silicon, titanium and/or germanium, preferably silicon,
Z represents one or more pentavalent elements such as phosphorus,
O represents oxygen,
a, b, c, and d are respectively the molar fractions of W, X, Y and Z with a+b+c+d=1
and 1 ≤ h ≤ 2.5,
with a microporous volume (pore sizes smaller than or equal to 2 µm) of at most 10 % of the total porous volume up to 300 nm, and
- either whererin the mesoporous volume, for the pore sizes of from 2 to 10 nm, is of at least 0.18 cm³/g and preferably of at least 0.3 cm³/g, and wherein the diameter of the maximum peak of the DFT distribution (Dmax) is such that 2 ≤ Dmax ≤ 5 nm and wherein the porous volume associated with pores sizes of Dmax ± 15 % represents at least 70 %, preferably 80 % and most preferably 90 % of the porous volume associated with pore sizes of from 2 to 10 nm,
- or wherein the mesoporous volume, for the pore sizes of from 4 to 15 nm, is of at least 0.70 cm³/g, and preferably of at least 1 cm³/g, and wherein the diameter of the maximum peak of the DFT distribution (Dmax) is broadly comprised between 4 and 15 nm and wherein the porous volume associated with pores sizes of Dmax ± 20 % represents at least 45 %, preferably 50 % and most preferably 90 % of the porous volume associated with pore sizes of from 4 to 15 nm.

The polymers prepared according to the present invention preferably have a controlled morphology.

D10, D50 and D90 are defined as the maximum particle diameters associated respectively with 10 wt%, 50 wt% and 90 wt% of the particles.

Preferably, D10 is at least 5 microns and more preferably, it is at least 10 microns.
Preferably, D50 is of from 20 to 150 microns.

The process for preparing the mesoporous particles used in the present invention comprises the steps of:
a) contacting and reacting, optionally in the presence of a swelling agent, soluble in the micelles, preferably trimethylbenzene:
   1) a solid inorganic source consisting of primary and/or secondary particles having a D10 of at least 2 microns and a D50 of at least 10 microns with a size of up to 10 mm, and corresponding to the general formula M_{n/q}(WₐX_{b}Y_{c}Z_{d}Oₕ) wherein M, W, X, Y, Z, O, n, q, a, b, c, d, and h have the same meaning as here-above, the particles' shape and size distribution of the silica source being close to that of the support,
   2) an agent able to mobilise said solid inorganic source,
   3) an agent able to calibrate the pores such as a surfactant,
   4) a solvent, preferably water,
b) filtering, washing, drying, eventually removing the pore calibrating agent and calcining the inorganic particles obtained in step a) under conditions of temperature, agitation and duration that do not substantially modify the size and morphology of the starting particles as observed by scanning electron microscope (SEM) and laser granulometry.

The porous volumes are measured by N₂ adsorption at 77 °K.

The porous volumes relative to pore sizes of from 2 to 300 nm are measured by the DFT method (cylindrical pores). The porous volumes relative to pore sizes smaller than or equal to 2 nm (microporous volume according to IUPAC) are measured by the t-plot method.

The structural porous volume is defined as the pore volume associated with pores having a diameter smaller than or equal to the medial diameter increased by 5 nm.
The textural porous volume is defined as the pore volume associated with pores having a diameter larger than or equal to the medial diameter increased by 5 nm.
The pore volume distributions are measured by the DFT method used for cylindrical pores.
The calibrating agents used in the present invention can be surfactants containing quaternary ammonium or phosphonium, substituted with aryl or alkyl having from 6 to 36 carbon atoms, the substituents being the same or different, associated with hydroxide anions, halides or silicates. For example, they can contain ions such as cetyltrimethylammonium, cetyltrimethylphosphonium, octadecyltrimethylammonium, octadecyltrimethylphosphonium, benzyltrimethylammonium, cetylpyridinium, decyltrimethylammonium, dimethyldidodecylammonium, trimethyldodecylammonium, as well as amines such as dodecylamine and hexadecylamine.

The solvent can be organic, preferably it is water.

The oxide mobilising agent can be a mineral or an organic base, preferably it is soda.

The pH of the reaction mixture is generally not important and can vary from 1 to 14. Crystallisation can take place without agitation or under moderate agitation in order to avoid particle attrition. Crystallisation temperature ranges from room temperature to 200 °C and reaction time is from a few minutes up to a few days.

The reaction time is optimised by SEM and laser granulometry control. A reaction time that is too long can produce degraded particles or increase the production of fines.

The resulting reaction product is suspended in the solvent: it is filtered, washed, dried and further calcined in order to eliminate the surfactant. The final product is a solid inorganic particle having homogeneous pore sizes either of cubic or of hexagonal symmetry. The pores having hexagonal symmetry are parallel to one another.

The starting inorganic solid according to the present invention is preferably of the general formula:

M_{n/q}(X_{b}Y_{c}Oₕ)

wherein X is Al, Y can be Si or Ti or a mixture thereof, b+c=1 and b ≤ 1
more preferably, Y is Si.
According to the present invention, the controlled morphology solid mesoporous particles are used as support to prepare either chromium-based catalyst systems, or metallocene catalyst systems, or Ziegler-Natta catalyst systems or late transition metals catalyst systems for producing polymers of controlled morphology.

The catalyst system can be a supported chromium-based catalyst wherein the chromium is deposited on the support by any method known in the art. The process for preparing a chromium-based catalyst comprises the steps of providing the mesoporous catalyst support of the present invention, and depositing on the support a chromium compound, preferably a chromium salt compound selected from at least one of chromium (III) acetylacetonate, chromium (III) acetate, chromium (III) oxalate and chromium (III) stearate. Alternatively, the chromium compound can be a chromocene, other organochromium complexes, or CrO₃ or its derivatives. The catalyst composition comprises from 0.4 to 4 wt% chromium, based on the weight of the chromium-based catalyst.

Optionally, the support can be further modified by treatment with one or more compounds selected from the group consisting of Al, P, B, Ti, and Mg, said treatment being carried out before, during or after the chromium deposition. For example, the support can be treated with an aluminium compound to form an alumina-containing silica support and thereafter the alumina-containing support is impregnated with chromium by treatment with the chromium salt. In another embodiment, the support is treated with the chromium salt to impregnate chromium on the support and thereafter the chromium-impregnated support is treated with the aluminium alkyl compound thereby to incorporate alumina in the support. The support can comprise from 0.5 to 4 wt% aluminium based on the weight of the chromium-based catalyst. The aluminium compound preferably comprises at least one aluminium alkyl compound such as triisobutyl aluminium (TIBAL), triethyl aluminium (TEAL), tri-n-hexyl aluminium (TNHAL) tri-n-octyl aluminium (TNOAL) or methyl aluminium oxane (MAO) or one aluminium alcoholate such as aluminium sec-butoxide.

Alternatively, the support can be treated with a titanium compound such as titanium tetraisopropoxide to form a titanated supported chromium-based catalyst having a titanium content of from 1 to 5 wt% based on the weight of the titanated chromium-based catlyst.

Finally, chromium can be introduced in the initial silica source prior to its transformation into a mesoporous material.

The catalyst component deposited on the support can be any metallocene catalyst known in the art for the polymerisation of olefins. These are described for example in EP-A-0,790,259.

They can be represented by the general formulae:

I. (CpR'ₖ)ₘ Y₂₋ₘMR"ₙX_{q}

wherein Cp is a cyclopentadienyl ring substituted or not substituted, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring, Y is a group Va or VIa element, M is a Group IVb, Vb or Vlb transition metal, R" is a C₁-C₄ alkylene radical, a dialkyl germanium or silicon or siloxane, or a alkyl phosphine or amine radical bridging either two (C₅R'ₖ) rings or a (C₅R'ₖ) ring and an heteroatom Y, X is a halogen, and m = 1 or 2, n = 0 to 3, q = 0 to 3 and the sum of m+n+q will be equal to the oxidation state of the metal.

II. (C₅R'ₖ)_{g}R"ₛ(C₅R'ₖ)MQ_{3-g}

and

III. R"ₛ(C₅R'ₖ)₂MQ'

wherein (C₅R'ₖ) is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring, R" is a C₁-C₄ alkylene radical, a dialkyl germanium or silicon or siloxane, or a alkyl phosphine or amine radical bridging two (C₅R'ₖ) rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0,1 or 2, s is 0 when g is 0, k is 4 when s is 1 and k is 5 when s is 0, and M is as defined above.

Exemplary hydrocarbyl radicals are methyl, ethyl, propyl, butyl, amyl, isoamyl, hexyl, isobutyl, heptyl, octyl, nonyl, decyl, cetyl, 2-ethylhexyl, phenyl and the like. Exemplary halogen atoms include chlorine, bromine, fluorine and iodine and of these halogen atoms, chlorine is preferred.

Exemplary hydrocarboxy radicals are methoxy, ethoxy, propoxy, butoxy, amyloxy and the like.

Exemplary of the alkylidene radicals are methylidene, ethylidene and propylidene, and i-butylidene.

An active site must be created by adding a cocatalyst having an ionizing action, such as a boron or a fluorine containing compound: for example a tetrakis(pentafluorophenyl) borate compound.

Alumoxane can also be used as cocatalyst. When alumoxane is used as a cocatalyst, any alumoxane known in the art can be used in the present invention.

The preferred alumoxanes comprise oligomeric linear and/or cyclic alkyl alumoxanes represented by the formulae: 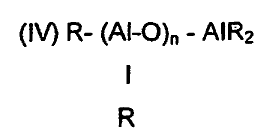 for oligomeric, linear alumoxanes and 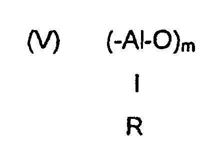 for oligomeric, cyclic alumoxanes,
wherein n is 1-40, preferably 10-20, m is 3-40, preferably 3-20 and R is a C₁-C₈ alkyl group and preferably methyl.

The catalyst system can be a supported Ziegler-Natta catalyst system prepared according to any method known in the art. The Ziegler-Natta catalyst system consists of a transition metal component (A) deposited on the mesoporous support of the present invention, an organoaluminium component (B) and optionally, an internal electron donor (C).

The transition metal compound (A) is the reaction product of an organomagnesium compound or a magnesium halide and a transition metal halide. The transition metal is selected from the group consisting of titanium, vanadium and zirconium or is a combination thereof. Preferably, it is titanium. Suitable titanium compounds for the preparation of component A are tetravalent halogenated titanium compounds, preferably titanium compounds of the general formula TiXₙ(OR)₄₋ₙ in which n is 1 to 4, X stands for chlorine or bromine, preferably it is chlorine, and R stands for identical or different hydrocarbon radicals, especially straight-chain or branched alkyl groups having 1 to 18, preferably 1 to 10, carbon atoms.

The organoaluminium compounds used may be reaction products of aluminium trialkyl or aluminium dialkyl hydrides with hydrocarbon radicals having 1 to 16 carbon atoms, preferably Al(iBu)₃ or Al(iBu)₂H and diolefins containing 4 to 20 carbon atoms, preferably isoprene; for example it is aluminium isoprenyl.
The internal electron donor can be selected from the group consisting of phthalate, 1,3-diether and tetrahydrofuran (THF).

The catalyst system can be a supported late transition metal catalyst system wherein the late transition metal is deposited on the mesoporous support of the present invention by any method known in the art. These methods are similar to the methods used for the supported metallocene catalysts. An active site is created by adding a cocatalyst having an ionizing action, such as alumoxane.

The present invention also provides a catalyst system for the production of controlled morphology polyolefins.

Preferably, all the catalyst systems described hereabove are supported on a mesoporous support having mesopore diameters centered around a diameter of at least 7 nm.

The present invention further provides a process for polymerising one or more vinyl containing monomers including olefins comprising 2 to 10 carbon atoms, vinyl aromatic compounds or vinyl acetate, in presence of the supported catalyst system. Preferably, the olefin is ethylene or propylene. The polymers so obtained have a morphology that can be determined and thus controlled by that of the catalyst supported on the mesoporous support of the present invention and they are substantially free of fines.

The polymerisation process can be conducted in either of gas phase, solution phase, slurry or slurry bath polymerisation process.

### Example 1.

### Preparation of support S1 according to the present invention.

1) In a 1l cylindrical reactor of 8 cm diameter, a solution of 310 ml water, 8.3 g of soda and 29.4 g of NORANIUM® MS 50 was prepared. NORANIUM® MS 50 is sold by CECA and it is trimethylalkylammonium chloride with an alkyl chain length of 16 to 18 carbon atoms.
2) At room temperature and under stirring (paddle or anchor agitator) 33 g (in anhydrous equivalent) of silica sold by RHODIA under the name ZEOSIL® 175 MP was added: the silica has a broad pore size distribution centered around 20 nm. Its granulometry is characterised by a main peak at about 150 microns, a broad tail towards fine particles and no particles smaller than 4 microns
3) Under continuous stirring, the temperature was raised to 100 °C and maintained at that level for 3 hours in a double envelope reactor maintained at constant temperature by an oil bath. The solid was then filtered on a Buchner filter under vacuum and washed with 6l of demineralised water. It was dried overnight in a ventilated stove at 90 °C and calcined at 550 °C, raising the temperature from room temperature (25°C) to 550 °C in 5 hours and maintaining at a temperature of 550 °C for two hours.
4) The final solid is characterised by N₂ adsorption/desorption at 77 °K (ASAP 2010 from MICROMERITICS) and by laser granulometry (MALVERN). The pore size distribution is calculated with the DFT method. The characteristics of the final product are summarised in Table I.

**TABLE I.**

| S1 | Surface BET | Structural porous volume (2-10 nm) | Medial pore diameter DFT | Medial particle diameter |
|---|---|---|---|---|
| | m²/g | cm³/g | nm | µm |
| Final inorganic solid | 1126 | 0.8 | 3.1 | 90 |

In addition, the granulometry of the final solid is characterised, as in the starting material, by a broad tail towards fine particles and no particles smaller than 4 microns The granulometry of the starting silica has thus been maintained and the distributions of the final and of the starting solids are very similar although not identical. In the process of the present invention no fines are produced (there is 0% of particles smaller than 4 microns) and the morphology of the starting material is maintained.

### Example 2.

### Preparation of support S2 according to the present invention.

This large pore mesoporous material was prepared as follows:
1) A solution of 620 ml of water, 16.6 g of soda and 58.8 g of NORANIUM® MS 50 was prepared.
2) 52 g of 1,3,5-trimethylbenzene (TMB) was added under stirring in order to dissolve the molecule into the surfactant micelle.
3) After 15 minutes of constant stirring, and under slow stirring, 66.14 g (in anhydrous equivalent) of SILOPOL 2104 was added to the mixture. SILOPOL 2104 is sold by GRACE: it has a narrow particle size distribution with 0% of particles smaller than 15 microns and a broad pore size distribution centered around 20 to 40 nm.
4) The temperature was raised to 100°C under stirring and maintained at that level for 16 hours.
5) The resulting solid was filtered and washed with 3 I of water. It was then dried in a ventilated stove at 70 °C and calcined at 550 °C by raising the temperature from 25 °C to 550 °C in 5 hours and maintaining at that temperature for 1 hour

The starting and resulting solids are characterised using the same methods as in support S1 and the results are summarised in Table II.

**TABLE II.**

| S2 | Surface BET | Structural porous volume (4-15 nm) | Textural porous volume (15-300 nm) | Diameter maximum peak of DFT distribution | D10 | D50 |
|---|---|---|---|---|---|---|
| | m²/g | cm³/g | cm³/g | nm | µm | µm |
| Starting silica | 324 | 0.20 | 1.53 | 20-40 | 30 | 46 |
| Final inorganic solid | 1070 | 1.70 | 0.11 | 9 | 8.2 | 46 |

The granulometry of the final solid is very close to that of the starting material as can be seen from the D50.

### Example 3.

### Preparation of a supported chromium-based catalyst CR1 with support S1.

A supported chromium-based catalyst was prepared using support S1 of Example 1 and following the method disclosed in Chem. Eur. J., n° 16, 6, 2000, p. 2960-2970. Chromium acetyl acetonate [Cr(acac)₃] complex was grafted on the surface of support S1.

Activation was then carried out in a quartz tube activator under fluidisation. The catalyst was heated up and maintained at a temperature of 600 °C during 6 hours in a flow of dry air of 200 Nl/h. During the cooling down to room temperature, when the temperature reached 400 °C, air was replaced with dry nitrogen. The activated catalyst was stored under dry nitrogen in order to avoid contamination.

### Example 4.

### Preparation of a supported chromium-based catalyst CR2 with support S2.

The supported chromium-based catalyst was prepared exactly as in described in Example 3, using support S2.

### Example 5.

The two supported chromium-based catalysts CR1 and CR2 were used to homopolymerise ethylene.

The polymerisation conditions and results are summarised in Table III.

**TABLE III.**

| | Temp °C | Activity g/g/h | MI2 g/10' | HLMI g/10' |
|---|---|---|---|---|
| CR1 | 102 | 591 | n.a. | 0.77 |
| | 106 | 694 | n.a. | 1.54 |
| | 110 | 639 | 0.039 | 4.1 |
| CR2 | 106 | 1277 | n.a. | 7.21 |
| | 106 | 580 | n.a. | 4.86 |
| | 108 | 1190 | 0.1 | 12.1 |
| n.a. means not available because too low. | | | | |

MI2 and HLMI have been measured following the method of standard test ASTM-D-1238 at a temperature of 190°C and under loads of 2.16 and 21.6 kg respectively.

It is observed that the catalyst based upon the large pore mesoporous material S2 has a higher activity than that based upon the S1 mesoporous support. Mesoporous supports with pores larger than 7 nm tend to produce catalysts with higher level of activity.

### Comparative Example 1.

### Supported chromium-based polymerisation catalysts based on MCM-41 support.

Two chromium-based catalysts were prepared using MCM-41 mesoporous silica supports and following the method disclosed in Chem. Eur. J., n° 16, 6, 2000, p. 2960-2970. Chromium acetyl acetonate [Cr(acac)₃] complexes were deposited on the surface of two mesoporous crytalline materials: an Al-containing silica support (CR3) with an Si/Al molar ratio of 27 and a pure silica support (CR4). The catalysts so obtained had a bad morphology and had to be pelletised and subsequently crushed to a size of 350 to 500 microns.

Activation was then carried out in a quartz tube activator. The catalyst was heated up and maintained at a temperature of 650 °C during 6 hours in a flow of dry air of 200 Nl/h. During the cooling down to room temperature, when the temperature reached 400 °C, air was replaced with dry nitrogen. The activated catalysts were yellow; they were stored under dry nitrogen in order to avoid contamination.

Polymerisation was carried out in a 4 litre stainless steel autoclave. The catalyst was introduced in the clean and dry vessel under nitrogen flow. The reactor was closed and 2l of isobutane were introduced in the vessel. The system was heated up under stirring at 104°C and ethylene was then introduced into the system. The overall pressure was maintained at 31.4 bars in order to dissolve about 6 wt% of ethylene in isobutane. During the polymerisation reaction ethylene was added to the system in order to maintain the overall pressure at the constant value of 31.4 bars. Continuous stirring at 450 rpm was maintained during the reaction in order to insure homogeneity of the system and efficient ethylene dissolution.

The results are summarised in Table IV.

**TABLE IV.**

| Catalyst | CR3 | CR4 |
|---|---|---|
| Activity g/g/h | 140 | 63 |
| MI2 g/10' | Too low | Too low |
| MI5 g/10' | 0.004 | 0.028 |
| HLMI g/10' | 0.564 | 1.381 |
| SR5 | 141 | 49 |
| Bulk density g/cm³ | 0.201 | 0.201 |

MI5 was measured following the method of standard test ASTM-D-1238 at a temperature of 190°C and under a load of 5 kg. SR5 is defined as the ratio HLMI/MI5.

The bulk density was measured following the method of standard test U.O.P. 294-88.

As can be seen, the polymerisation carried out with the supported chromium-based catalyst of the present invention had a much higher activity than prior art catalyst systems. Without wishing to be bound by a theory, it is believed that the good morphology of the present catalyst system leads to a better fluidisation during activation of the catalyst and therefore to a higher activity. In addition, the secondary pores in this invention result in a good diffusion of the reactants also resulting in a good activity.

Due to better particle morphology, the fluff morphology is at least in line with that obtained with standard silica catalysts and far superior to that obtained with normal mesoporous MCM-type material.

### Example 6.

### Preparation of supported metallocene catalyst system M1 based on support S1.

6.05 g of dried mesoporous support S1 was put in suspension with 100 ml of toluene, resulting in a yellow suspension. 15.5 ml of a 30 wt% solution of methylalumoxane (MAO) was added drop-wise to the suspension and it was allowed to react for 4 hours, under agitation and nitrogen reflux. The suspension was filtered and no MAO was found in the mother liquor. The precipitate was washed twice with 50 ml of toluene and three times with pentane in order to facilitate the drying step. The solid was then dried overnight under a moderate vacuum of 20 mbar. 11.22 g of a white free flowing powder was obtained.

5.01 g of the support reacted with MAO was suspended in 100 ml of toluene. 0.203 g of tetrahydroindenyl zirconium dichloride, was poured in the suspension that turned orange. The reaction was allowed to proceed for 2 hours. It was then filtered yielding a colourless filtrate, a consequence of the good anchoring of the total amount of metallocene onto the support. The precipitate was washed twice with 50 ml of toluene and three times with pentane. It was then dried for 2 hours under a moderate vacuum of 20 mbar. 5.03 g of a pale yellow powder was isolated.

### Example 7.

The metallocene catalyst system M1 was used in the copolymerisation of ethylene with hexene comonomer with and without hydrogen. The polymerisation conditions and the results are summarised in Table V.

### Comparative Example 2.

A supported metallocene catalyst M2 was prepared following the method of Example 6, except that the support was a standard silica having a pore volume of 1.6 cm³/g and a specific surface area of 300 m²/g and that 0.3 g of tetrahydroindenyl was used instead of 0.203 g. It was used to copolymerise ethylene with hexene comonomer with and without hydrogen. The polymerisation conditions and results are summarised in Table V.

**TABLE V.**

| Catalyst | M1 Hydrogen NI | | M2 Hydrogen NI | |
|---|---|---|---|---|
| | 0 | 0.5 | 0 | 0.5 |
| Hexene wt% | 1.83 | 1.83 | 1.83 | 1.83 |
| Yield g | 214.9 | 615 | 478.5 | 510.7 |
| Productivity g/g | 7192 | 8772 | 6372 | 6705 |
| Activity g/g/h | 7192 | 8772 | 6372 | 6705 |
| MI2 g/10' | Too low | 0.006 | too low | too low |
| HLMI g/10' | 0.416 | 0.977 | 0.788 | 2.024 |
| Bulk density g/cm³ | 0.297 | 0.222 | 0.254 | 0.291 |
| <<< wt% | 0.0 | 0.2 | 0.0 | 0.0 |
| 63 microns wt% | 0.2 | 1.2 | 0.2 | 0.0 |
| 125 microns wt% | 1.4 | 3.2 | 1.8 | 1.6 |
| 250 microns wt% | 9.5 | 7.4 | 8.5 | 12.0 |
| 500 microns wt% | 48.9 | 28.8 | 30.0 | 40.4 |
| 1000 microns wt% | 33.6 | 43.7 | 28.4 | 35.9 |
| 1600 microns wt% | 3.0 | 10.7 | 8.9 | 4.4 |
| 2000 microns wt% | 3.4 | 4.8 | 22.2 | 5.6 |

As can be seen from Table V, the activity of the catalyst system according to the present invention is significantly higher than that of the prior art catalyst system even though the amount of metallocene is 50% higher in the comparative example.

## Claims

1. Process for preparing a supported catalyst for the production of polymers by polymerising or copolymerising one or more olefins comprising 2 to 10 carbon atoms, vinyl aromatic compounds or vinyl acetate, which comprises the steps of:
a) providing a mesoporous support of controlled morphology;
b) depositing a catalyst component on the support of step a)
**characterised in that** the mesoporous support is composed of inorganic mesoporous particles having a D10 of at least 2 microns and a D50 of at least 10 microns, and is represented by the general formula:
M_{n/q}(WₐX_{b}Y_{c}Z_{d}Oₕ)
wherein
M represents one or more ions selected from the group of ammonium, IA, IIA, and VIIB,
n and q represent respectively the equivalent fraction and the valence of the M ion(s) and n/q represents the number of moles or the molar fraction of the M ion(s),
W represents one or more divalent elements,
X represents one or more trivalent elements,
Y represents one or more tetravalent elements,
Z represents one or more pentavalent elements,
O represents oxygen,
a, b, c, and d are respectively the molar fractions of W, X, Y and Z with a+b+c+d=1
and 1<=h<=2.5,
- wherein the microporous volume (pore sizes smaller than or equal to 2 µm) is of at most 10 % of the total porous volume up to 300 nm, and
- wherein the mesoporous volume, for the pore sizes of from 2 to 10 nm, is of at least 0.18 cm³/g and preferably of at least 0.3 cm³/g, and
- wherein the diameter of the maximum peak of the DFT distribution (Dmax) is such that 2 ≤ Dmax ≤ 10 nm and preferably such that 2 ≤ Dmax ≤ 5 nm and,
- wherein the porous volume associated with pores sizes of Dmax ± 15 % represents at least 70 %, preferably 80 % and most preferably 90 % of the porous volume associated with pore sizes of from 2 to 10 nm,
or
- wherein the mesoporous volume, for the pore sizes of from 4 to 15 nm, is of at least 0.70 cm³/g, and preferably of at least 1 cm³/g, and
- wherein the diameter of the maximum peak of the DFT distribution (Dmax) is broadly comprised between 4 and 15 nm and
- wherein the porous volume associated with pores sizes of Dmax ± 20 % represents at least 45 %, preferably 50 % and most preferably 90 % of the porous volume associated with pore sizes of from 4 to 15 nm.

2. The process according to claim 1 to prepare polymers of controlled morphology.

3. The process according to claim 1or claim 2 wherein the mesoporous volume is at least 0.3 cm³/g.

4. The process according to any one of the preceding claims wherein M is hydrogen and/or sodium ions.

5. The process according to any one of the preceding claims wherein W is manganese, cobalt, iron and/or magnesium.

6. The process according to any one of the preceding claims wherein X is aluminium, boron, iron and/or gallium.

7. The process according to any one of the preceding claims wherein Y is silicon, titanium and/or germanium.

8. The process according to any one of the preceding claims wherein Z is phosphorous.

9. The process according to any one of the preceding claims wherein the starting inorganic solid is of the general formula:
M_{n/q}(X_{b}Y_{c}Oₕ)
wherein X is Al, Y is Si or Ti or a mixture thereof, b+c=1 and b<=1.

10. The process according to claim 8 wherein Y is Si.

11. The process according to any one of the preceding claims wherein D10 is at least 5 microns.

12. The process according to any one of the preceding claims wherein D50 is of from 20 to 150 microns.

13. The process according to any one of the preceding claims wherein 0% of fines is produced.

14. A chromium-based catalyst system supported on the mesoporous inorganic oxide support of controlled morphology according to any one of claims 1 to 13.

15. A metallocene catalyst system supported on the mesoporous inorganic oxide support of controlled morphology according to any one of claims 1 to 13.

16. A Ziegler-Natta catalyst system supported on the mesoporous inorganic oxide support of controlled morphology according to any one of claims 1 to 13.

17. A late transition metal catalyst system supported on the mesoporous inorganic oxide support of controlled morphology according to any one of claims 1 to 13.

18. A supported catalyst system according to any one of claims 14 to 17 wherein the mesoporous diameters are centered around a diameter of at least 7 nm.

19. A supported chromium-based catalyst system wherein the chromium is introduced in the initial silica source prior to its transformation into a mesoporous material according to any one of claims 1 to 13.

20. The chromium-based catalyst of claim 19 wherein the mesopores diameters are centered around a diameter of at least 7 nm.

21. A process for polymerising or copolymerising one or more olefins comprising 2 to 10 carbon atoms, vinyl aromatic compounds or vinyl acetate, in the presence of the supported catalyst system of any one of claims 14 to 20.

22. The process of claim 21 wherein the olefin is ethylene or propylene.

## Patentansprüche

1. Prozess zur Herstellung eines geträgerten Katalysators für die Produktion von Polymeren durch Polymerisieren oder Copolymerisieren von einem oder mehr Olefinen, die 2 bis 10 Kohlenstoffatome, aromatische Vinylverbindungen oder Vinylacetat umfassen, welcher die Schritte umfasst des:
a) Bereitstellens eines mittelporigen Trägers mit geregelter Morphologie;
b) Ablagerns einer Katalysatorkomponente auf dem Träger von Schritt a),
**dadurch gekennzeichnet, dass** der mittelporige Träger aus anorganischen mittelporigen Partikeln mit einem D10 von zumindest 2 Mikron und einem D50 von zumindest 10 Mikron besteht und dargestellt ist durch die allgemeine Formel:
M_{n/q}(WₐX_{b}Y_{c}Z_{d}Oₕ),
wobei
M ein oder mehr Ionen, gewählt aus der Gruppe von Ammonium, IA, IIA und VIIB, darstellt,
n und q jeweils die äquivalente Fraktion und die Valenz des M-Ions bzw. der M-Ionen darstellen und n/q die Molzahl oder den Molenbruch des M-Ions bzw. der M-Ionen darstellt,
W ein oder mehr zweiwertige Elemente darstellt,
X ein oder mehr dreiwertige Elemente darstellt,
Y ein oder mehr vierwertige Elemente darstellt,
Z ein oder mehr fünfwertige Elemente darstellt,
O Sauerstoff darstellt,
a, b, c und d jeweils die Molenbrüche von W, X, Y und Z mit a+b+c+d=1
und 1<=h<=2,5 sind;
- wobei das Mikroporenvolumen (Porengrößen kleiner oder gleich 2 µm) höchstens 10% des gesamten Porenvolumens bis zu 300 nm beträgt, und
- wobei das Mittelporenvolumen, für die Porengrößen von 2 bis 10 nm, zumindest 0,18 cm³/g und vorzugsweise zumindest 0,3 cm³/g beträgt, und
- wobei der Durchmesser des Höchstwerts der DFT-Verteilung (Dmax) derart ist, dass 2 ≤ Dmax ≤ 10 nm und vorzugsweise derart, dass 2 ≤ Dmax ≤ 5 nm ist, und
- wobei das Porengrößen von Dmax ± 15% zugeordnete Porenvolumen zumindest 70 %, vorzugsweise 80 % und meistbevorzugt 90 % des Porengrößen von 2 bis 10 nm zugeordneten Porenvolumens darstellt,
oder
- wobei das Mittelporenvolumen, für die Porengrößen von 4 bis 15 nm, zumindest 0,70 cm³/g und vorzugsweise zumindest 1 cm³/g beträgt, und
- wobei der Durchmesser des Höchstwerts der DFT-Verteilung (Dmax) breit zwischen 4 und 15 nm enthalten ist, und
- wobei das Porengrößen von Dmax ± 20% zugeordnete Porenvolumen zumindest 45 %, vorzugsweise 50 % und meistbevorzugt 90 % des Porengrößen von 4 bis 15 nm zugeordneten Porenvolumens darstellt.

2. Der Prozess gemäß Anspruch 1 zur Herstellung von Polymeren mit geregelter Morphologie.

3. Der Prozess gemäß Anspruch 1 oder Anspruch 2, wobei das Mittelporenvolumen zumindest 0,3 cm³/g beträgt.

4. Der Prozess gemäß einem der vorgenannten Ansprüche, wobei M Wasserstoff und/oder Natriumionen ist.

5. Der Prozess gemäß einem der vorgenannten Ansprüche, wobei W Mangan, Kobalt, Eisen und/oder Magnesium ist.

6. Der Prozess gemäß einem der vorgenannten Ansprüche, wobei X Aluminium, Bor, Eisen und/oder Gallium ist.

7. Der Prozess gemäß einem der vorgenannten Ansprüche, wobei Y Silikon, Titan und/oder Germanium ist.

8. Der Prozess gemäß einem der vorgenannten Ansprüche, wobei Z Phosphor ist.

9. Der Prozess gemäß einem der vorgenannten Ansprüche, wobei der anorganische Ausgangsfeststoff die allgemeine Formel hat :
M_{n/q}(X_{b}Y_{c}Oₕ),
wobei X Al ist, Y Si oder Ti oder eine Mischung davon ist, b+c=1 und b<=1.

10. Der Prozess gemäß Anspruch 8, wobei Y Si ist.

11. Der Prozess gemäß einem der vorgenannten Ansprüche, wobei D10 zumindest 5 Mikron beträgt.

12. Der Prozess gemäß einem der vorgenannten Ansprüche, wobei D50 20 bis 150 Mikron beträgt.

13. Der Prozess gemäß einem der vorgenannten Ansprüche, wobei 0% an Siebfeinem produziert wird.

14. Ein Katalysatorsystem auf Chrombasis, geträgert auf dem mittelporigen anorganischen Oxidträger mit geregelter Morphologie, gemäß einem der Ansprüche 1 bis 13.

15. Ein Metallocenkatalysatorsystem, geträgert auf dem mittelporigen anorganischen Oxidträger mit geregelter Morphologie gemäß einem der Ansprüche 1 bis 13.

16. Ein Ziegler-Natta-Katalysatorsystem, geträgert auf dem mittelporigen anorganischen Oxidträger mit geregelter Morphologie gemäß einem der Ansprüche 1 bis 13.

17. Ein Spätübergangsmetallkatalysatorsystem, geträgert auf dem mittelporigen anorganischen Oxidträger mit geregelter Morphologie gemäß einem der Ansprüche 1 bis 13.

18. Ein geträgertes Katalysatorsystem gemäß einem der Ansprüche 14 bis 17, wobei die Mittelporendurchmesser um einen Durchmesser von zumindest 7 nm zentriert sind.

19. Ein geträgertes Katalysatorsystem auf Chrombasis, wobei das Chrom in die anfängliche Silikaquelle eingebracht wird, bevor diese zu einem mittelporigen Material gemäß einem der Ansprüche 1 bis 13 umgewandelt wird.

20. Der chrombasierte Katalysator gemäß Anspruch 19, wobei die Mittelporendurchmesser um einen Durchmesser von zumindest 7 nm zentriert sind.

21. Ein Prozess zum Polymerisieren oder Copolymerisieren von einem oder mehr Olefinen, die 2 bis 10 Kohlenstoffatome, aromatische Vinylverbindungen oder Vinylacetat umfassen, in Gegenwart des geträgerten Katalysatorsystems von einem der Ansprüche 14 bis 20.

22. Der Prozess gemäß Anspruch 21, wobei das Olefin Ethylen oder Propylen ist.

## Revendications

1. Procédé pour préparer un catalyseur déposé sur un support pour la production de polymères par polymérisation ou par copolymérisation d'une ou de plusieurs oléfines comprenant de 2 à 10 atomes de carbone, de composés vinylaromatiques ou d'acétate de vinyle, qui comprend les étapes consistant à :
a) procurer un support mésoporeux de morphologie contrôlée ;
b) déposer un composant de catalyseur sur le support de l'étape a) ;
**caractérisé en ce que** le support mésoporeux est composé de particules inorganiques mésoporeuses possédant une valeur D10 d'au moins 2 microns et une valeur D50 d'au moins 10 microns, et répond à la formule générale :
M_{n/q}(WₐX_{b}Y_{c}Z_{d}Oₕ)
dans laquelle
M représente un ou plusieurs ions choisis parmi le groupe comprenant l'ammonium, les groupes IA, IIA et VIIB ;
n et q représentent respectivement la fraction équivalente et la valence de l'ion ou des ions M et n/q représente le nombre de moles de la fraction molaire de l'ion ou des ions M ;
W représente un ou plusieurs éléments divalents ;
X représente un ou plusieurs éléments trivalents ;
Y représente un ou plusieurs éléments tétravalents ;
Z représente un ou plusieurs éléments pentavalents ;
O représente l'oxygène ;
a, b, c et d représentent respectivement les fractions molaires de W, X, Y et Z, dans des conditions dans lesquelles a + b + c + d = 1 et 1 ≤ h ≤ 2,5.
- le volume des micropores (dimensions des pores inférieures ou égales à 2 µm) représentant au maximum 10 % du volume total des pores jusqu'à 300 nm ; et
- le volume des mésopores, pour des dimensions de pores de 2 à 10 nm, représentant au moins 0,18 cm³/g et de préférence au moins 0,3 cm³/g ; et
- le diamètre du pic maximal de la distribution DFT (Dmax) étant tel que 2 ≤ Dmax ≤ 10 nm, de préférence tel que 2 ≤ Dmax ≤ 5 nm ; et
- le volume des pores associé à des dimensions de pores de Dmax ± 15 % représentant au moins 70 %, de préférence 80 % et de manière de loin préférée 90 % du volume des pores associé à des dimensions de pores de 2 à 10 nm ;
ou bien
- le volume des mésopores, pour des dimensions de pores de 4 à 15 nm, représentant au moins 0,70 cm³/g et de préférence au moins 1 cm³/g ; et
- le diamètre du pic maximal de la distribution DFT (Dmax) étant compris grosso modo entre 4 et 15 nm ; et
- le volume des pores associé à des dimensions de pores de Dmax ± 20 % représentant au moins 45 %, de préférence 50 % et de manière de loin préférée 90 % du volume des pores associé à des dimensions de pores de 4 à 15 nm.

2. Procédé selon la revendication 1, pour préparer des polymères de morphologie contrôlée.

3. Procédé selon la revendication 1 ou 2, dans lequel le volume des mésopores représente au moins 0,3 cm³/g.

4. Procédé selon l'une quelconque des revendications précédentes, dans lequel M représente des ions hydrogène et/ou des ions sodium.

5. Procédé selon l'une quelconque des revendications précédentes, dans lequel W représente le manganèse, le cobalt, le fer et/ou le magnésium.

6. Procédé selon l'une quelconque des revendications précédentes, dans lequel X représente l'aluminium, le bore, le fer et/ou le gallium.

7. Procédé selon l'une quelconque des revendications précédentes, dans lequel Y représente le silicium, le titane et/ou le germanium.

8. Procédé selon une quelconque des revendications précédentes, dans lequel Z représente le phosphore.

9. Procédé selon une quelconque des revendications précédentes, dans lequel le produit solide inorganique de départ répond à la formule générale
M_{n/q}(X_{b}Y_{c}Oₕ)
dans laquelle
X représente l'aluminium, Y représente le silicium ou le titane ou un de leurs mélanges, b + c = 1 et b ≤ 1.

10. Procédé selon la revendication 8, dans lequel Y représente le silicium.

11. Procédé selon l'une quelconque des revendications précédentes, dans lequel D10 représente au moins 5 microns.

12. Procédé selon l'une quelconque des revendications précédentes, dans lequel D50 représente une valeur entre 20 et 150 microns.

13. Procédé selon l'une quelconque des revendications précédentes, dans lequel on obtient 0 % de fines.

14. Système de catalyseur à base de chrome déposé sur un support d'oxyde inorganique mésoporeux de morphologie contrôlée selon l'une quelconque des revendications 1 à 13.

15. Système de catalyseur de métallocène déposé sur un support d'oxyde inorganique mésoporeux de morphologie contrôlée selon l'une quelconque des revendications 1 à 13.

16. Système de catalyseur de type Ziegler-Natta déposé sur un support d'oxyde inorganique mésoporeux de morphologie contrôlée selon l'une quelconque des revendications 1 à 13.

17. Système de catalyseur à base de métal de transition tardive déposé sur un support d'oxyde inorganique mésoporeux de morphologie contrôlée selon l'une quelconque des revendications 1 à 13.

18. Système de catalyseur déposé sur un support selon l'une quelconque des revendications 14 à 17, dans lequel les diamètres des mésopores sont centrés autour d'un diamètre d'au moins 7 nm.

19. Système de catalyseur déposé sur un support à base de chrome dans lequel le chrome est introduit dans la source de silice initiale avant sa transformation en une matière mésoporeuse selon l'une quelconque des revendications 1 à 13.

20. Catalyseur à base de chrome selon la revendication 19, dans lequel les diamètres des mésopores sont centrés autour d'un diamètre d'au moins 7 nm.

21. Procédé pour polymériser ou copolymériser une ou plusieurs oléfines comprenant de 2 à 10 atomes de carbone, des composés vinylaromatiques ou de l'acétate de vinyle, en présence du système de catalyseur déposé sur un support selon l'une quelconque des revendications 14 à 20.

22. Procédé selon la revendication 21, dans lequel l'oléfine est de l'éthylène ou du propylène.
